# EUROPEAN PATENT APPLICATION

(11) **EP 0 597 715 A1**
(43) Date of publication of application: **18.05.1994**
(21) Application number: 93309036.7
(22) Date of filing: 10.11.1993
(51) Int. Cl.: G01S 5/16, G01S 1/02

(54) **Automatic aircraft landing system calibration**

(30) Priority: 10.11.1992 GB 9223511
(71) Applicant: GEC-MARCONI AVIONICS (HOLDINGS) LIMITED, Stanmore, Middlesex HA7 4LY (GB)
(72) Inventor: Sillitto, Hillary Gil, Mid Calder, West Lothian EH53 0FG (GB)
(74) Representative: Rees, Alexander Ellison

(57) **Abstract**

To allow calibration of an airfield microwave landing system an aircraft carries a microwave landing system receiver and a TV camera together with a data processing system. The aircraft is guided in to land by the microwave landing system and the positions of the airfield landing lights are observed by the TV camera, the images from the TV camera are processed by the data processing system and the position and orientation of the aircraft relative to the runway at each point in its landing approach is calculated trigonometrically by the data processing system.

The aircrafts actual flight path and orientation can then be checked against the intended flight path and orientation and the necessary changes to the microwave landing system to eliminate any differences and so properly calibrate the microwave landing system can be calculated.

## Description

This invention relates to apparatus for calibrating automatic aircraft landing systems and particularly microwave landing systems at airfields.

Microwave landing system (MLS) are used at many airports to allow civil aircraft to carry out blind landings under automatic control in fog or low cloud or similar low visibility conditions which make conventional visual landings impossible or unsafe. A microwave landing system consists of equipment on the ground transmitting a microwave signal and controlling the landing of aircraft on a runway and a receiver in each aircraft, a separate set of ground equipment is required for each runway.

Clearly it is important that the ground equipment of the microwave landing system is properly calibrated so as to guide the aircraft to the runway along the correct path. The current procedure for checking that a microwave landing system is properly oriented is to place a kinetheodolite at a suitable point on the airfield, land an aircraft under the control of the MLS and to use the kinetheodolite to track the aircraft and measure its position and flight path throughout the approach accurately, the actual and intended paths and landing points of the aircraft can then be compared and the MLS ground equipment adjusted appropriately to correct for any discrepancies.

There are a number of disadvantages to this procedure, the first is that kinetheodolites are bulky and expensive and require highly skilled crew to operate them and as a result they are not standard equipment at airports but are taken from airport to airport by a specialist MLS calibration team who must travel to an airport, set up their kinetheodolite, track an aircraft doing an MLS approach and then travel to another airport. As a result each calibration takes a considerable length of time even when the calibration team travel by air and use their own aircraft for the calibration MLS approaches. Another disadvantage is that in many circumstances a laser is required to provide range information in order to allow the position of the aircraft to be properly calculated, this is a significant safety hazard because of the need to ensure that the crews eyes are not damaged by the laser and the need to ensure that they are not dazzled temporarily during landing.

A further disadvantage is that since both the kinetheodolite and laser range finder equipment are optical devices MLS calibration can only be carried out in good visibility conditions in daylight. Clearly in many parts of the world such conditions are rare for large parts of the year and as a result calibration teams must either wait around for long periods at specific airports or be prepared to rush to an airport requiring calibration once clear weather is reported, furthermore these requirements make it difficult to fit in calibration in periods when the runway is not in use by scheduled traffic and as a result the expense of calibration is increased by the cost of having to order the timings of scheduled flights.

This invention was intended to provide a means and a method of MLS calibration overcoming these problems at least in part.

This invention provides automatic aircraft landing system calibration apparatus comprising an aircraft carrying a TV camera, an image processing system and a data processing system, the TV camera being arranged to observe the runway landing lights and the image processing system being arranged to use the output from the TV camera to calculate the position of the aircraft relative to the lights and the data processing system being arranged to compare this calculated position with the aircrafts position according to the automatic landing system.

The invention is based on the fact that lights are placed around runways in positions which will allow a pilot to accurately judge his position and orientation relative to the runway and the realisation that these lights could be used to allow a tracking system carried onboard an aircraft to accurately plot the position of the aircraft throughout an MLS landing without requiring any additional equipment to be deployed on the ground. Although it is necessary to know the precise positions of the runway lights this can easily be measured on the ground, and since the runway lights are fixed one measurement is all that will ever be necessary no matter how many times the MLS is calibrated.

The accuracy of positioning required in an MLS is approximately 1 metre, dropping to 5 cm on landings.

The invention will now be described with reference to the accompanying diagramatic figures, in which;
Figure 1 shows a general view of a runway and its associated landing lights, and
Figure 2 shows a block diagram of a calibration system employing the invention on board an aircraft.

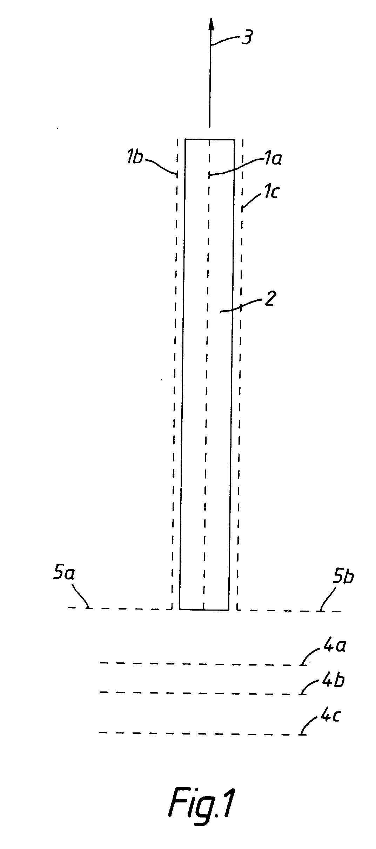

Referring to Figure 1 a typical arrangement of runway lights is shown. This comprises a first line of lights 1a on the centre of a runway 2 and two further lines of lights 1b and 1c at each side of the runway, all three lines of lights 1a to 1c are parallel to the runway axis 3. A typical runway size is 30 metres wide by 2000 metres long but it will be realised that there are many different sizes of runway in use and the present invention is not dependant on the actual size of the runway.

Generally there are also threshold lights lying in lines 4a, 4b and 4c at right angles to the runway axis 3 and at some distance in front of it. Additional lines of lights 5a, 5b are placed on each side of the runway 2 at right angles to its axis 3 and at the start of the hard runway surface.

The distance of an aircraft from a line of threshold lights 4a, 4b, 4c can be determined by accurately measuring the angles subtended by the ends of the line of lights at the aircraft or by the angles subtended by any pair of lights 4a, 4b, 4c, of course the angle subtended by the whole line of lights will allow the distance to be measured more accurately because it provides a longer base line.

The sideways position of the aircraft relative to the runway axis 3 can be determined by measuring the angles of the three lines of runway lights 1a, 1b, 1c relative to the base formed by the lines of threshold lights 4a, 4b, 4c.

The height of the aircraft can be determined by the angle of the apex of the triangle formed by the two side lines of runway lights 1b, 1c taken in combination with the distance which has already been calculated. Of course any specific arrangement of lights may also contain other useful geometric arrangements which can be used to cross-check these measurements.

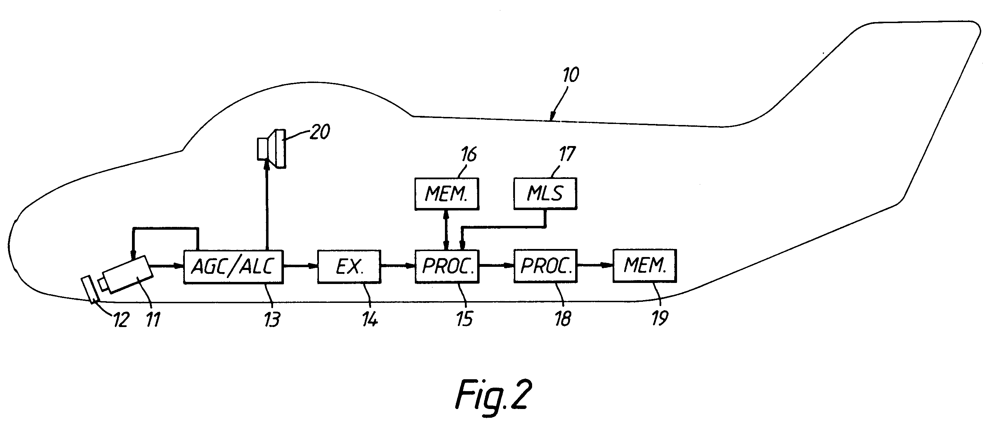

A suitable sensor system to allow these measurements to be carried out is shown in Figure 2. An aircraft 10 carries a TV camera 11 which looks forward at the runway area through a filter 12. The filter 12 is arranged to exclude as much of the sunlit background light as possible in order to maximise the contrast of the runway lights relative to their background. The exact characteristics of the filter 12 will depend on precisely what lights are used, but for tungsten filament lamps with a colour temperature of about 2000 kelvin the spectral emission of the lamps will peak at about one micron wavelength whereas sunlight peaks at around 0.55 micron wavelength so by using a filter 12 rejecting radiation with a wavelength shorter than 900 nanometres a considerable increase in apparent contrast can be obtained. The use of the filter 12 also maximises the performance of the system in poor visibility since the longer wavelengths of radiation are scattered less by fog and mist, as a result the use of the filter 12 will allow the system to be used in poor visibility where it would otherwise not be possible to calibrate the MLS.

The characteristics of the camera 11 will also depend on the type of lamp used by the runway lights but for tungsten filaments lamps a silicon CCD camera sensitive up to a wavelength of about 1.05 microns would be especially effective.

The TV camera 11 has a telecentric optical system, that is to say the stop which the defines the rays entering the camera is located such that the centre of the ray bundle from any point in the cameras field of view reaches the image plane of the camera 11 normal to the image plane, the CCD sensor of the camera 11 is placed in the image plane so this will ensure that errors in focus do not effect the positional accuracy.

The angles subtended by the runway lights will obviously change dramatically as the aircraft approaches from a distance of several kilometers to landing where it will be some tens of meters from them so, in order to provide optimum measurement accuracy at all ranges, as the aircraft 10 travels along the approach path towards the runway 2 the camera 11 is provided with several alternative sets of optics (not shown) which are moved in front of the camera 11 as needed as the aircraft 10 moves. Provided the optical characteristics of each of the sets of optics are known and it is known at all times which set of optics is in use this will not effect the accuracy of the system. It would of course be possible to use a plurality of TV cameras 11 each with a single optical system and switch from one camera to another rather than a single camera and moving the optical systems. In the system shown two alternative optical systems are provided for the camera 11 one giving a field of view of 10o and the other giving a field of view of 45°.

A CCD sensor array in the camera 11 is a 2000 pixel by 1000 pixel array giving a total of 2000000 pixels points, and operates at a frame rate of 6.5 frames per second giving an output pixel rate of 15 mega hertz. When this camera looks at the angles subtended by a typical line of runway lights of length approximately 50 metres from a range of 25 metres so that the lights are at an angle of 45°, a 2000 pixel wide array will allow apparent length of about one part in 2000 to be sensed which corresponds to a movement of about 2.5 cm, thus a system of this type will provide enough accuracy of measurement to properly calibrate the MLS.

The digital output data from the TV camera 11 consists of a series of pixels or data points each of which has its brightness represented by a digital value together with synchronisation signals to allow the position of each of the pixels in the frame to be unambiguously deduced. A digital data output of the TV camera 11 passes through an automatic gain and level control (AGC/ALC) which examines the data stream and adjusts the sensitivity of the TV camera 11 in order to keep the signal level from the brightest points in the field of view, which will be the pixel points corresponding to the runway lights, near the top of the CCD sensors dynamic range so as to achieve maximum contrast. This sensitivity adjustment is carried out by varying the integration time of the CCD sensor. This integration time should be held to the minimum possible consistent with good contrast being achieved between the runway lights and the background because the aircraft 10 is moving and as a result the accuracy with which the position of the aircraft 10 can be measured relative to the runway will be limited by the fact that the aircraft moves during the integration period. A typical integration period is around 1 millisecond in which time an aircraft flying at a speed of 50 metres per second will cover 5 cm, so this source of error should not reduce the accuracy of the system below that required to calibrate an MLS. The data stream is then passed to a point feature extractor 14 which extracts the point features from the scene viewed by the camera and determines their position in the field of view. The extractor finds point features by using convolution processing employing a two dimensional median filter to detect bright points in the image but ignore single pixel noise spikes. The point extractor 14 then enhances the contrast of the point objects and thresholds the entire image to that only the information about these bright point objects remains and this information on bright point objects in the field of view is passed on to the image processor 15.

The image processor 15 compares the point image co-ordinates supplied to it by the extractor 14 with the expected positions of the runway lights held in a memory 16 and compares the two to find the actual position and orientation of the aircraft relative to the runway lights. The processor 15 first correlates the detected bright points with the expected lines of lights around the runway 2 and then eliminates obviously spurious points and fills in gaps due to missed detections, the data processor then identifies the key elements in the scene described above, that is the relative angles of the lights parallel to the runway and the end points of the lines of threshold lights and calculates the aircraft range and elevation from the runway using simple geometry. The processor 15 then compares this measured position with the aircrafts position according to the microwave landing system. The MLS data is provided by an MLS receiver 17 which is guiding the aircraft 10 and also provide data for the processor 15 the processor 15 generates an error signal giving the difference between the actual position of the aircraft 10 and its position according to the MLS and supplies this to a further data processor 18.

In order for this error information to be of value it is necessary that the position data provided by the MLS corresponds to the aircraft position simultaneously with the image being received by the camera 11, in order to ensure this synchronisation it maybe necessary to add additional memory or delay devices to store data for fixed or variable periods. Such synchronisation is often required in data processing tasks and need not be described in detail here.

The processor 18 stores the error data in a memory device 19 and also uses calman filtering on these error values to provide a continuous estimate of the aircrafts position and attitude. By employing calman filtering to obtain an average estimate of the error value measured at a variety of points the error in the measurement of the MLS systems error can be reduced. It is well known that if N data points are averaged to obtain a better estimate of true value the error in the estimate will reduce by a factor of square root N compared with the error associated with a single observation.

The error data can then be used to calibrate the MLS and correct it as necessary.

The image processing functions can be carried out in practice by application specifically integrated circuits (ASIC) while data processing and calman filtering can be invited using one or more high speed digital signal processors (DSP).

Before calibration at each airport the positional data regarding the lights for each runway of interest would be loaded from a floppy disk or some other computer data storage medium, alternatively all data on all runways of interest could be permanently stored within the system.

The image produced after passing through the automatic gain and level control unit 13 is displayed to the aircraft crew on a visual display unit 20 so that any gross problems in the optical system can be spotted without going through unnecessary and useless attempt at calibration.

In order to ensure that the changes of orientation in the aircraft do not cause runway lights to move out of the field of view of the optical system it may be necessary to stabilise the boresight direction of the optical system to be independent of the orientation of the aircraft, this can be easily done by placing the TV camera in a gimbaled housing or by using a gimbaled mirror in the optical system and controlling this by a dedicated gyro stabiliser or by the aircraft inertial navigation system.

Instead of selecting the TV camera 11 and filter 12 to centre the sensitivity of the system on the emission peak of the lamps used in the runway lights, around one micron wavelength for tungsten filament lamps, the camera 11 and filter 12 could be selected to be most sensitive to the wavelength region at approximately 700 nanometres wavelength in which the reflectivity of concrete and grass are approximately equal. In temperate regions this will minimise the contrast between the runway and the surrounding land and will thus make it easier to pick out the contrast peaks representing the lights.

Instead of using a plurality of sets of optics with fixed fields of view and focal length a single zoomed optical system could be used to simplify the system. The main drawback of this approach is that the zoomed optics would have to be accurately calibrated and have its focal length determine for each position of the zoom mechanism to an accuracy better than one part in a thousand in order to obtain the necessary accuracy.

In point extraction statistical processing to find local statistical anomalies corresponding to bright point objects could be used instead of the convolution processing technique described. It will be realised that image processing is a very broad field and that there are a number of well known techniques for point extraction any of which could be used in the present invention.

In later processing to determine the actual position of the aircraft relative to the runway lighting system, instead of identifying key elements in the scene geometry and calculating the position of the aircraft from them it would be possible to use the mathematical technique known as damped least squares optimisation to successively adjust the estimated aircraft position and attitude until the error function made up of a weighted combination of the sums of the squares of the errors between actual and predicted positions of the lights is minimised. The advantage of this technique is that it would be resistant to corruption by a few of the light positions being omitted due to their not being detected by the light extraction system and all available data, that is the positions of all the visible lights, is used to obtain an optimum estimate of position, the disadvantage of this system is that it requires considerably more processing power than the other system in order to provide a real time output.

Although the system described carries out real time processing of the camera data on board the aircraft it would be possible to record the data, possibly after some preprocessing to reduce the amount of data that needs to be recorded, for later analyses.

## Claims

1. Automatic aircraft landing system calibration apparatus comprising an aircraft carrying a TV camera, an image processing system and a data processing system, the TV camera being arranged to observe the runway landing lights and the image processing system being arranged to use the output from the TV camera to calculate the position of the aircraft relative to the lights and the data processing system being arranged to compare this calculated position with the aircrafts position according to the automatic landing system.
